(19) Europäisches Patentamt / European Patent Office / Office européen des brevets

(11) **EP 1 606 590 B1**

(12) **EUROPÄISCHE PATENTSCHRIFT**

(45) Veröffentlichungstag und Bekanntmachung des Hinweises auf die Patenterteilung:
**25.03.2009 Patentblatt 2009/13**

(21) Anmeldenummer: **03788883.1**

(22) Anmeldetag: **18.12.2003**

(51) Int Cl.:
**G01D 5/244** (2006.01)

(86) Internationale Anmeldenummer:
**PCT/DE2003/004213**

(87) Internationale Veröffentlichungsnummer:
**WO 2004/085971 (07.10.2004 Gazette 2004/41)**

(54) **POSITIONSMESSVERFAHREN UND POSITIONSMESSSYSTEM ZUR SIGNALPERIODEN-VERVIELFACHUNG**

POSITION MEASURING METHOD AND POSITION MEASURING SYSTEM USED IN THE MULTIPLICATION OF SIGNAL PERIODS

PROCEDE DE MESURE DE POSITION ET SYSTEME DE MESURE DE POSITION DESTINES A LA MULTIPLICATION DE PERIODES DE SIGNAUX

(84) Benannte Vertragsstaaten:
**AT BE BG CH CY CZ DE DK EE ES FI FR GB GR HU IE IT LI LU MC NL PT RO SE SI SK TR**

(30) Priorität: **25.03.2003 DE 10313518**

(43) Veröffentlichungstag der Anmeldung:
**21.12.2005 Patentblatt 2005/51**

(73) Patentinhaber: **Baumer Hübner GmbH**
**10967 Berlin (DE)**

(72) Erfinder: **HILLER, Bernhard**
**13465 Berlin (DE)**

(74) Vertreter: **Grünecker, Kinkeldey, Stockmair & Schwanhäusser Anwaltssozietät Leopoldstrasse 4 80802 München (DE)**

(56) Entgegenhaltungen:
**EP-A- 0 328 683        EP-A- 0 552 726**
**DE-C1- 10 138 640        US-B1- 6 265 992**

**Beschreibung**

**Technisches Gebiet**

Die Erfindung betrifft ein Positionsmessverfahren und ein Positionsmesssystem, durch welche die Signalperiodenanzahl eines eine Position repräsentierenden Sinus- und Cosinus-Signals vervielfacht werden kann. Bei dem Positionsmessverfahren wird aus einem von einem Positionssensor erzeugten Positionsmessverfahren, bei dem aus einem von einem Positionssensor erzeugten Eingangs-Sinus-Signal und Eingangs-Cosinus-Signal, ein digitales Positionssignal, das eine vom Positionssensor gemessene Position repräsentiert, berechnet und digital gefiltert, wobei in Abhängigkeit vom gefilterten Positionssignal ein Ausgangs-Sinus-Signal und ein Ausgangs-Cosinus-Signal mit jeweils einer gegenüber der Frequenz der Eingangs-Signale vervielfachten Signalperiode erzeugt werden. Das Positionsmesssystem ist versehen mit einer Eingangsschnittstelle die im Betrieb ein Eingangs-Sinus-Signal und Eingangs-Cosinus-Signal eines Positionssensors zuführbar ist, mit einer Berechnungseinheit, durch die aus dem Eingangs-Sinus-Signal und dem Ausgangs-Cosinus-Signal ein digitales, eine vom Positionssensor gemessene Position repräsentierendes Positionssignal erzeugbar ist, und mit einer Signalerzeugungseinheit, durch die in Abhängigkeit vom Positionssignal ein Ausgangs-Sinus-Signal und ein Ausgangs-Cosinus-Signal mit jeweils einer gegenüber dem Eingangs-Sinus-Signal und Eingangs-Cosinus-Signal vervielfachten Signalperiode erzeugbar ist, und mit einem zwischen der Berechnungseinheit und der Eingangsschnittstelle angeordneten Digitalfilter.

**Stand der Technik**

Positionsmesssysteme werden üblicherweise zur Lage- bzw. Winkelbestirnmung eingesetzt. So muss beispielsweise in Werkzeugmaschinen die Lage des Werkzeuges relativ zum Werkstück genau messbar sein, um hohe Fertigungsgenauigkeiten zu erzielen. Üblicherweise weist ein Positionsmesssystem eine Maßstabsteilung und eine Signalerzeugungseinheit auf, durch die die Bewegung der Maßstabsteilung relativ zur Signalerzeugungseinheit bestimmt und ein die Relativbewegung repräsen- tierendes Signal ausgegeben wird. Ein solches Signal kann beispielsweise in Form eines Rechtecksignals eine zeitliche Aufeinanderfolge von Impulsen (High-Low-Signale. Bei Längenmesssystemen wird pro Längeneinheit eine bestimmte Anzahl von High-Low-Signalen erzeugt, beispielsweise 10 High-Low-Signale pro Millimeter.

Aus der Anzahl der High-Low-Signale pro Zeiteinheit lässt sich dann einfach die Drehzahl bzw. die Relativgeschwindigkeit der Maßstabsteilung gegenüber der Signalerzeugungseinheit berechnen.

Die Positionsmesssysteme können die High-Low-Signale auf optischem, magnetischem, induktivem oder kapazitivem Wege erzeugen, wobei sich die optischen Systeme wegen ihrer hohen Auflösung und Genauigkeit auszeichnen.

Bei den optischen Systemen durchstrahlt beispielsweise das Licht einer Leuchtdiode eine sogenannte Maske, die im geringen Abstand, typischerweise 0,1 mm, über der Maßstabsteilung, beispielsweise einer Inkrementalscheibe oder einem Längenmaßstab, angebracht ist. Die Maßstabsteilung ist in regelmäßigen Abständen mit transparenten und nicht transparenten Markierungen versehen. Wenn die Maßstabsteilung im Zuge der zu erfassenden Bewegung gegenüber der Maske verschoben wird, bilden sich regelmäßige Hell-Dunkel-Bereiche. Diese werden fotoelektrisch durch einen Sensor abgetastet, wobei man ein sinusähnliches Positionssignal erhält, das z.B. durch Komparatoren leicht in die oben beschriebenen High-Low-Impulse umgesetzt werden kann.

Durch entsprechende Anordnung weiterer fotoelektrischer Sensoren wird üblicherweise neben dem ersten sinusähnlichen Signal auch ein zweites um 90° phasenverschobenes cosinusähnliches Signal erzeugt. Dadurch lässt sich die Verfahrrichtung detektieren. Der Vorteil der Sinus- und Cosinus-Signale liegt darin, dass aufgrund der gegenüber den häufig verwendeten High-Low-Impulsen durch Auswertung der Signalamplitude eine wesentlich höhere Positionsauflösung als bei Rechtecksignalen möglich ist. Allerdings erfordert dieses Vorgehen eine aufwendigere Signalverarbeitung.

Allerdings ist bei der Auswertung der Sinus- und Cosinus-Signale darauf zu achten, dass deren Frequenzen durch die nachfolgende Auswerteelektronik noch erfasst werden können. Um die Frequenzen eingehender, hochfrequenter Sinus- und Cosinus-Signale von optischen Wegmeßsystemen zu verringern und nachfolgend verarbeiten zu können, sind im Stand der Technik Systeme bekannt, durch die die Auflösung der Positionssignale vergröbert wird. Auf elektronischem Wege wird dies durch die Vorrichtungen und Verfahren der EP 0 872 714 A1, der DE 198 15 438 A1, der US 6,097,318 und der US 6,265,992 B1 erreicht.

Bei einigen Anwendungen sind an die mit optischen Abtastprinzipien arbeitenden Positionsmesssysteme zu stellenden mechanischen Randbedingungen wie z.B. der kleine Abstand von typischerweise 0,1 mm nicht realisierbar, so dass dort andere Abtastverfahren zur Anwendung kommen. Außerdem verbieten sich in vielen Fällen optische Systeme, wie beispielsweise bei der Verwendung von Positionsmesssystemen in Holzbearbeitungsmaschinen, wo die Späne und der Holzstaub die optische Abtastung trotz entsprechender Kapselung behindern. Eine magnetische oder induktive Abtastung bleibt hier unbeeinträchtigt.

Bei einem magnetischen Abtastverfahren besteht die Maßstabsteilung aus periodisch wechselnd magnetisierten Markierungen. Der Abstand zwischen den Markierungen auf der Maßstabsteilung bewegt sich dabei im Millimeter-Bereich, so dass nach einer Faustformel der Abstand zwischen der Signalerzeugungseinheit und der Maßstabsteilung in diesem Größenbereich liegen kann. Die magnetischen Verfahren lassen daher einen größeren Abstand und insbesondere eine größere Abstandsvariation zwischen der Signalerzeugungseinheit und der Maßstabsteilung zu. Der Sensor, beispielweise ausgeführt nach dem magnetoresistiven Prinzip, liefert dann wiederum je magnetischer Markierung ein sinus- und ein cosinusähnliches Signal.

Aufgrund der gröberen Maßverkörperung werden bei magnetischen und induktiven Positionsmesssystemen wesentlich weniger Signale pro Umdrehung bzw. pro Längeneinheit ausgegeben. Um dennoch eine hohe Positionsauflösung erzielen zu können, sind hohe Anforderungen an die Qualität der von einem Positionsmesssystem gelieferten Signale zu stellen: Diese müssen in ihrer Signalamplitude möglichst gleich sein, sollten keinen Signaloffset besitzen, eine möglichst perfekte Sinusform aufweisen, keine Rauschanteile besitzen und um möglichst exakt 90 Grad gegeneinander in der Phase verschoben sein. Zusätzlich darf auch die Auswerteeinheit, die die Sinus-und Cosinus-Signale verarbeitet, keine derartigen oder weitere Fehler aufweisen, da anderenfalls nur eine mit Fehlern behaftete Positionsbestimmung möglich ist.

Da die Fehlerfreiheit der Signale des Messsystems und der Auswerteeinheit, die üblicherweise Bestandteil eines Servoreglers bzw. einer Steuerung ist, in der Praxis nicht oder nur unzureichend gewährleistet werden kann, wäre es wünschenswert, aus relativ groben, sinusähnlichen Signalen durch entsprechende Signalverarbei-tung qualitativ hochwertige sinusähnliche Signale mit einer höheren Anzahl von Signalperiode je Weg- bzw. Winkelstück zu erzeugen. Die Fehler der üblicherweise eingesetzten Auswerteeinheiten sind dann weit weniger gewichtig.

Im Stand der Technik sind Verfahren zur Erhöhung der Signalfrequenz, bzw. zur Signalperioden-Vervielfachung in der DE 101 38 640 C1, in der EP 0 552 726 B1 und in der EP 1 236 973 A2 beschrieben.

Bei dem Verfahren und der Vorrichtung der EP 0 552 726 B1 werden das Eingangs-Sinus-und Eingangs-Cosinus-Signal multiplikativ und additiv so miteinander verknüpft, dass durch Implementierung trigonornetrischer Formeln die Frequenz dieser Signale erhöht wird. Dabei finden die Formelberechnungen an den analogen Signalen statt. Dies erfordert jedoch Schaltungen, die selbst wiederum Fehler produzieren.

In der EP 1 236 973 A2 wird die relative Phasenlage des Sinus-und Cosinus-Signals dazu ausgenutzt, Rechtecksignale höherer Frequenz zu erzeugen. Der Nachteil dieser Vorrichtung liegt darin, dass die erzeugten Rechtecksignale nur eine vergleichsweise geringe Positionsauflösung zulassen bzw. die maximale Verfahrge- schwindigkeit bzw. Drehzahl durch die dann auftretenden sehr hohen Frequenzen der Rechtecksignale beschränkt ist.

Die 101 38 640 C1 bildet den nächstkommenden Stand der Technik. In der Patentschrift ist ein System beschrieben, bei dem zwei phasenverschobene, analoge Eingangssignale digitalisiert werden. Aus den digitalisierten Eingangssignalen wird ein digitales Positionssignal berechnet, das digital gefiltert wird. Durch Ausblenden der höherwertigen Bits wird ein digitales Signal mit vervielfachten Signalperioden erzeugt.

## Darstellung der Erfindung

In Anbetracht der Nachteile der aus dem Stand der Technik bekannten Verfahren zur Vervielfachung einer der Erfindung daher die Aufgabe zugrunde, ein Positionsmessverfahren und eine Positionsmessvorrichtung zu schaffen, die fehlerrobust die Anzahl der Signalperioden in Signalen von Weg- und Winkelmesssystemen vervielfachen.

Diese Aufgabe wird beim erfindungsgemäßen Positionsmessverfahren zur Signalerioden-Vewielfachung dadurch gelöst, dass im Zuge der Filterung aus dem Positionssignal ein digitales Positionssignal mit einer gegenüber dem berechneten Positionssignal erhöhten Auflösung gebildet wird. Beim eingangs genannten Positionsmesssystem ist vorgesehen, dass das Positionssignal vor dem Digitalfilter eine Auflösung von $i$ Bit und nach dem Digitalfilter eine Auflösung von $k$ Bit aufweist, wobei $k > i$ gilt.

Durch diese Lösung ist es auf einfache Weise möglich, die Auflösung des Positionsmessverfahrens bzw. des Positionsmesssystems zu erhöhen. Durch die Bildung des Positionssignals aus dem Eingangs-Sinus-Signal und dem Eingangs-Cosinus-Signal lassen sich Fehler, die nur in jeweils einem der beiden Eingangs-Signale enthalten sind, leicht eliminieren, so dass sie nicht in den Ausgangs-Signalen enthalten sind. Dadurch kann die Genauigkeit in dem in Abhängigkeit von dem Positionssignal gebildeten Ausgangs-Sinus-Signal und Ausgangs-Cosinus-Signal erhöht werden.

Der so bestimmte Positionswert kann unter Verwendung eines schnellen Digitalfilters in seiner Auflösung erhöht werden, wobei gleichzeitig durch den Digitalfilter höherfrequente Störungen unterdrückt werden können. Unter der Erhöhung der Auflösung ist dabei eine Darstellung des Positionswertes mit einer erhöhten Anzahl von Datenbits zu verstehen.

Diese einfache Lösung kann durch die folgenden Ausgestaltungen hinsichtlich ihrer Genauigkeit und Fehlerrobustheit weiter verbessert werden. Die einzelnen Ausgestaltungen sind dabei jeweils unabhängig voneinander kombinierbar.

Bevorzugt wird das Positionssignal aus dem Arkustangens (*atan*) des Quotienten aus dem Eingangs-Sinus-Signal und dem Eingangs-Cosinus-Signal gebildet. Der atan kann durch Auslesen einer Look-up-Tabelle bestimmt oder z. B. durch den sogenannten Cordic-Algorithmus berechnet werden. Daneben können auch andere Verfahren zum Einsatz kommen. Beispielsweise eignen sich auch sogenannte Naehlaufvedahren.

Die Berechnung des *atan* des Quotienten des Eingangs-Sinus-Signals und des Eingangs-Cosinus-Signals bietet den erheblichen Vorteil, dass gleichzeitige Amplitudenschwankungen in den Eingangs-Signalen keine Fehler in dem daraus berechneten Positionswert bewirken. Bei vielen anderen Verfahren kann dies nicht gewährleistet werden.

So können in einer vorteilhaften Ausgestaltung in einem Speicher der Vorrichtung bzw. des Signalgenerators zwei Ausgangstabellen vorgesehen sein, die jeweils ei- nem Ausgangs-Signal zugeordnet sind und parallel adressiert und ausgelesen wer- den. Durch diese Maßnahme kann auf einfache Weise eine gleichphasige Erzeu- gung der Ausgangs-Signale und ein hohe Phasentreue auch bei sehr hohen sefrequenzen sichergestellt werden.

Durch die hochaufgelöste Berechnung des Positionssignals, das den Verlauf der Lage des Messmittels über die Zeit als Digitalwert wiedergibt, kann die Frequenzerhöhung in den beiden Ausgangs-Signalen zuverlässig durchgeführt werden. Um den Berechnungsaufwand zu minimieren, können die Ausgangstabellen in der wenigstens einen Ausgangs-Tabelle gespeichert sein, so dass diese Tabellen lediglich ausgelesen werden müssen. Selbstverständlich ist aber auch eine Berechnung eines Sinus- und eines Cosinussignals aus dem hochaufgelösten Positionswert durch den Signalgenerator möglich.

In einer besonders vorteilhaften Ausgestaltung kann der hochaufgelöste momentane Wert des Positionssignals in Form eines digitalen K-Wortes, also einer digitalen Zahl aus $k$ Bits, ausgegeben werden, wobei aus dem $k$-Wort lediglich $m$ aufeinanderfolgende Bits ausgelesen werden, wobei ($m < k$) für ganzzahlige positive und ansonsten beliebige Werte $k$ und $m$ gilt. In Abhängigkeit von dem aus dem längeren $k$-Wort ausgelesenen $m$-Wort werden das Ausgangs-Sinus-Signal und das Ausgangs-Cosinus-Signal erzeugt, vorzugsweise indem die Ausgangstabelle durch das $m$-Wort adressiert wird.

Der Vorteil bei dieser Ausgestaltung liegt darin, dass die Frequenzvervielfachung auf sehr leicht zu implementierende Weise durch die Position des $m$-Wortes innerhalb des $k$-Wortes eingestellt werden kann: Überraschend hat sich nämlich ergeben, dass eine Frequenzerhöhung um den Faktor $2^{(k-km)}$ zwischen den Eingangs- und Ausgangs-Signalen erhalten wird, wenn das höchstwertige Bit des $m$-Wortes an der Position $k_m$, $k_m \leq k$, liegt. Die aus dem $m$-Wort gebildete Signalfolge ändert sich mit dieser erhöhten Periodizität gegenüber der Periodizität des Positionssignals.

Eine Reihe von weiteren vorteilhaften Ausgestaltungen befasst sich mit der Aufbereitung der Eingangs-Signale, um das Positionssignal möglichst genau berechnen zu können. Auf diese Weise wird verhindert, dass sich die in den Eingangs-Signalen vorhandenen Fehler verstärkt in den Ausgangs-Signalen mit vervielfachter Signalperiode wiederfinden. Alle diese Filterungsvorgänge vor der eigentlichen Frequenzerhöhung finden in einer Signalkonditionierungseinheit statt.

So kann in einer Ausführungsform eine Signalkonditionierungseinheit vorgesehen sein, durch die Abweichungen im Eingangs-Sinus und Eingangs-Cosinus von der Soll-Form berechenbar und zur Ausregelung dieser Abweichungen an den Eingangs-Sinus und den Eingangs-Cosinus zurückführbar sind. Grundsätzlich kann die rückgekoppelte Konditionierung der Eingangs-Signale vor und/oder nach deren Digitalisierung durch Analog-Digital-Wandler stattfinden, d.h. die Signalkonditionierung kann rein analog, oder rein digital bzw. gemischt analog und digital ausgeführt sein. Aufgrund des einfachen Aufbaus ist die Ausregelung des bereits digitalisierten Eingangs-Signale bevorzugt.

Die Fehlerkorrektur bei der Konditionierung kann die Erfassung von Abweichungen -der Amplitude des Eingangs-Sinus von der Amplitude des Eingangs-Cosinus und das Ausregeln eventueller Amplitudenunterschiede, bzw. das Einregeln beider Signalamplituden auf einen gleichen Sollwert, umfassen. Ähnlich können Signal-Offsets, d.h. Abweichungen des über eine oder mehrere Perioden berechneten Mittelwerts des Eingangs-Sinus-Signals und des Eingangs-Cosinus-Signals von einem Soll-Mittelwert, beispielsweise einer vorbestimmten Null-Lage, berechnet und ausgeregelt werden. Auch die relative Phasenlage des Eingangs-Sinus-Signals zum Eingangs-Cosinus-Signal kann im Zuge der Signalkonditionierung erfasst und Abweichungen von der Soll-Phasenlage 90° können insbesondere durch gegenseitige Addition eines Teils des jeweils anderen Eingangs-Signals ausgeglichen werden. Diese Schritte können in der Interpolationseinheit ausgeführt werden.

Des weiteren kann die Signalkonditionierungseinheit einen digitalen Filter, insbesondere einen Tiefpass-Filter, jeweils für das bereits mit hoher Abtastrate digitalisierte Eingangs-Sinus- und das Eingangs-Cosinus-Signal umfassen, der hochfrequente Störungen und Rauschanteile, hervorgerufen beispielsweise durch Frequenzumrichter reduziert und damit die Qualität der digitalisierten Eingangssignale erhöht. Die Grenzfrequenz dieses Digitalfilters, das in unterschiedlichster Art, vorzugsweise aber als einfach zu realisierendes digitales Mittelwertfilter realisiert werden kann, kann so bemessen sein, dass diese auch bei maximaler Verfahrgeschwindigkeit, bzw. Drehzahl unter der dann auftretenden Frequenz der Eingangssignale liegt.

Unabhängig von der Vorkonditionierung kann in weiteren, an sich vorteilhaften Ausgestaltungen ein weiterer Verarbeitungsschritt vorgesehen sein, durch den Fehleranteile herausgefiltert werden, die der Signalquelle innewohnen. Gemäß einer vorteilhaften Ausgestaltung findet eine solche vorzugsweise digitale Filterung erst nach der Berechnung des digitalen Positionssignals statt. Gegenüber einer Filterung jeweils der beiden Eingangs-Signale kann dadurch der Rechenaufwand verringert werden.

Dabei können die vom Messsystem und von den Umgebungsbedingungen abhängigen Fehleranteile beispielsweise dadurch herausgefiltert werden, dass das aus den Eingangs-Signalen, die auch wie oben beschrieben vorverarbeitet sein können, berechnete Positionssignal mit vorab gespeicherten Fehlercharakteristiken verglichen wird. Insbesondere können für verschiedene, messsystemtypische Fehler verschiedene Charakteristiken abgespeichert sein. Stimmt das Positionssignal mit einer vorab bestimmten Fehlercharakteristik oder mit mehreren vorab bestimmten Fehlercharakteristiken überein, so kann durch in Abhängigkeit von dieser Fehlercharakteristik bestimmte, vorgegebene Algorithmen oder durch Verwendung von vorab abgespeicherten Look-up-Tabellen der signalgeberabhängige Fehler im Positionssignal eliminiert werden.

Um die vorab gespeicherten Fehlercharakteristiken und die dazugehörigen Eliminations-Algorithmen und/oder Look-up-Tabellen zu erzeugen, werden die Messsysteme experimentell auf systembedingte Fehler untersucht. In Abhängigkeit von den bei diesen Untersuchungen entdeckten Fehlern werden beispielsweise Look-up-Tabellen generiert, die Werte enthalten, die diese Fehler berücksichtigen und damit die fehlerbehafteten Werte korrigieren.

Die im Positionssignal auftretenden, messsystemabhängigen Fehler- und insbesondere Rauschanteile (auch Quantisierungsrauschen) können durch einen oder mehrere Digitalfilter, beispielsweise digitale Tiefpass-Filter, herausgefiltert werden. Die Grenzfrequenz der Tiefpass-Filters muss jedoch höher als die für die nachfolgende Regelung relevante Frequenz sein.

Insbesondere besteht eine Möglichkeit zum Herausfiltern der geberabhängigen Fehlersignale darin, dass aus dem digitalen Positionssignal ein gleitender Mittelwert aus mehreren zeitlich kurz aufeinanderfolgenden Werten gebildet wird. Durch diese Maßnahme lassen sich hochfrequente Rauschanteile herausfiltern.

Ein weiterer Vorteil der Bildung eines gleitenden Mittelwertes liegt darin, dass der Mittelwert mit einer Auflösung angegeben werden kann, die größer ist als die Auflösung der einzelnen zu mittelnden Werte. Wird beispielsweise der Mittelwert aus mehreren zeitlich kurz aufeinanderfolgenden Positionssignalen gebildet, die jeweils eine Auflösung von $i$ Bits aufweisen, so kann der berechnete Mittelwert eine Auflösung von $k$ Bits aufweisen, wobei $k$ größer $i$ gilt.

In Abhängigkeit von dem in der Signalkonditionierungseinheit und gegebenenfalls im Digitalfilter von signalgeberabhängigen Fehler- und Rauschanteilen befreiten Positionssignal, insbesondere von dem durch Mittelwertbildung berechneten hochaufgelösten Positionssignal, wird dann in der Signalerzeugungseinheit das Ausgangs-, Sinus- und Cosinussignal erzeugt. Insbesondere kann das Positionssignal, wie oben erwähnt, zur Adressierung der Ausgangs-Tabellen des Ausgangs-Sinus und des Ausgangs-Cosinus verwendet werden.

Falls für das Herausfiltern der signalgeberabhängigen Fehleranteile eine Mittelwertbildung vorgenommen wurde, so kann, um die Genauigkeit der Berechnung des Positionssignals weiter zu verbessern, in einer vorteilhaften Weiterbildung die aufgrund der Mittelwertbildung eingetretene Laufzeitverzögerung kompensiert werden. Bei einer derartigen Kompensation der Laufzeitverzögerung wird der Mittelwert in Abhängigkeit vom bisherigen Signalverlauf und in Abhängigkeit von der Anzahl der in den Mittelwert einfließenden Stützpunkte korrigiert, um möglichst nahe an den tatsächlichen Momentanwert zu kommen.

Das Ausgangs-Sinus-Signal und das Ausgangs-Cosinus-Signal, die wie oben erwähnt jeweils eine höhere Frequenz aufweisen als das Eingangs-Sinus-Signal bzw. das Eingangs-Cosinus-Signal, können schließlich mittels Digital-Analog-Wandler in analoge Signale umgewandelt werden und als analoge Signale an eine, üblicherweise in der Regelbaugruppe oder der Steuerung befindlichen, Auswerteeinheit geleitet werden.

Parallel zur Verarbeitung der Eingangs-Signale, d.h. des Eingangs-Sinus-Signals und des Eingangs-Cosinus-Signals, können auch die Referenz-Signale in ihrer Phasenlage und Impulsdauer an die erhöhte Signalperioden-Zahl angepasst werden.

Im Folgenden wird die Erfindung beispielhaft an einer Ausführungsform mit Bezug auf die Zeichnungen erläutert. Gemäß den oben beschriebenen möglichen Ausgestaltungsvarianten können dabei einzelne Merkmale bei der beschriebenen Ausführungsform unabhängig voneinander hinzugefügt oder weggelassen sowie kombiniert werden.

**Kurze Beschreibung der Zeichnungen**

Es zeigen:

Fig. 1   ein schematisches Blockdiagramm einer erfindungsgemäßen Vorrichtung zur Signalperioden-Vervielfachung bei der Verwendung mit einer Positionsmesseinrichtung;

Fig. 2   ein schematisches Blockdiagramm mit Einzelheiten des Aufbaus der Vorrichtung zur Signalperioden-Vervielfachung der Fig. 1;

Fig. 3  eine schematische Darstellung des Aufbaus und der Funktion einer Ausführungsform eines Signalgenerators der Fig. 2;

Fig. 4  ein schematisches Blockdiagramm mit Einzelheiten des Aufbaus einer Positionsbestimmungseinheit der Vorrichtung der Fig. 2.

**Wege zur Ausführung der Erfindung**

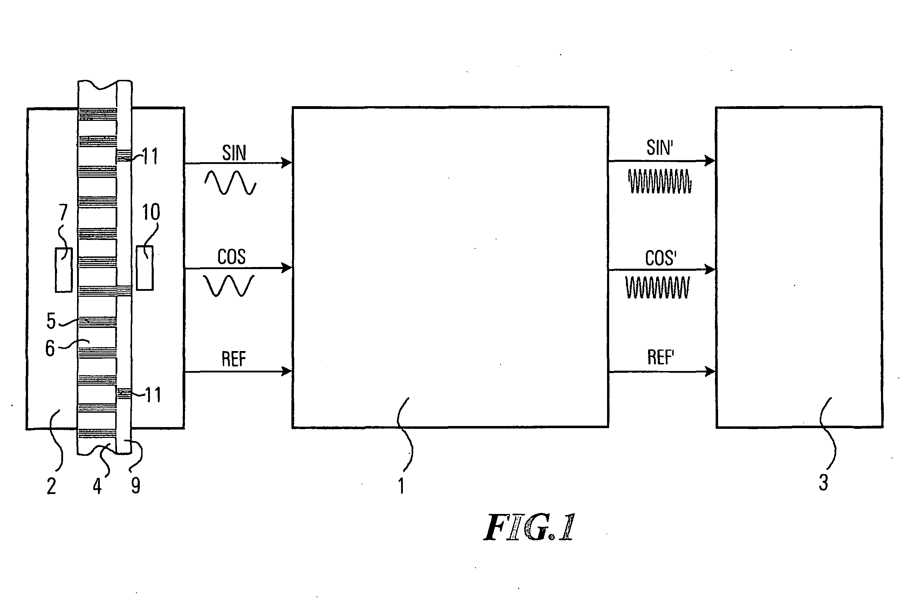

In Fig. 1 ist das erfindungsgemäße System zur Vervielfachung der Signalperiode schematisch als Funktionsblock 1 zwischen einem Wegmessmittel 2 und einer Auswerteeinheit 3 gezeigt.

Das Wegmessmittel 2 umfasst eine Maßstabteilung 4, die in regelmäßigen Abständen mit Markierungen 5, 6 versehen ist, sowie einen relativ dazu beweglichen Positionssensor 7. Die Maßstabteilung 4 wird durch den Positionssensor 7 abgetastet. Das Wegmessmittel bzw. der Signalgeber 2 liefert dem System 1 ein Eingangs-Sinus-Signal SIN und ein Eingangs-Cosinus-Signal COS.

Bei einem optischen Signalgeber können die Markierungen 5, 6 Hell-Dunkel-Bereiche bzw. transparente und nicht transparente Bereiche darstellen; bei magnetischer Funktionsweise sind die Markierungen 5, 6 Bereiche, die unterschiedlich magnetisiert sind. Ebenso sind andere Funktionsprinzipien wie z.B. induktive und kapazitive Prinzipien möglich. Allen Prinzipien gemeinsam ist, dass bei der Relativbewegung zwischen der Maßstabteilung 4 und dem Positionssensor 7, das Wegmessmittel 2 periodisch modulierte, analoge Inkrementalsignale SIN und COS erzeugt. Über diese steht sowohl die Positionsinformation bezüglich der Relativlage von Maßstabteilung 4 und Positionssensor 7 als auch die entsprechende Information über die Bewegungsrichtung zur Verfügung.

Beim Ausführungsbeispiel der Fig. 1 ist ein Wegmessmittel 2 dargestellt, die über eine linear ausgebildete Maßstabteilung 4 eine lineare Relativbewegung erfasst. Alternativ kann auch eine Maßstabteilung 4 vorgesehen sein, welche eine rotatorische Bewegung erfasst. In diesem Fall wird anstelle der linearen Maßstabteilung 4, wie sie in Fig. 1 dargestellt ist, eine scheibenförmige Maßstabteilung verwendet. Das Abtastprinzip bleibt dabei im Wesentlichen gleich.

Zusätzlich zu den Signalen SIN und COS kann über eine oder mehrere Markierungen 9 ein Referenzsignal REF von einem Sensor 10 zur Verfügung gestellt werden. Das Referenzsignal REF dient dazu, eine oder mehrere vordefinierte Stellungen 11 als Referenzpositionen zu markieren.

Die Signale SIN, COS und REF werden dem System 1 zugeführt, das aus den Eingangs-Signalen veränderte Ausgangssignale SIN', COS' und REF' erzeugt. Die Ausgangs-Signale SIN' und COS' weisen dabei eine gegenüber den Eingangs-Signalen SIN und COS erhöhte Periodenzahl, d.h. erhöhte Frequenz, auf. Das Signal REF' wird von der Vorrichtung 1 entsprechend angepasst.

Durch die erhöhte Periodenzahl ermöglichen die Ausgangs-Signale SIN' und COS' gegenüber den Eingangs-Signalen SIN und COS eine um den Faktor der Periodenanzahlvervielfachung verbesserte Auflösung der Lage des Wegmessmittels 4. Dadurch lassen sich in der Fig. 1 nicht gezeigte Antriebe, Achsen bzw. Positioniereinrichtungen u.a., an welche das Positionsmesssystem angebaut ist, genauer regeln bzw. steuern.

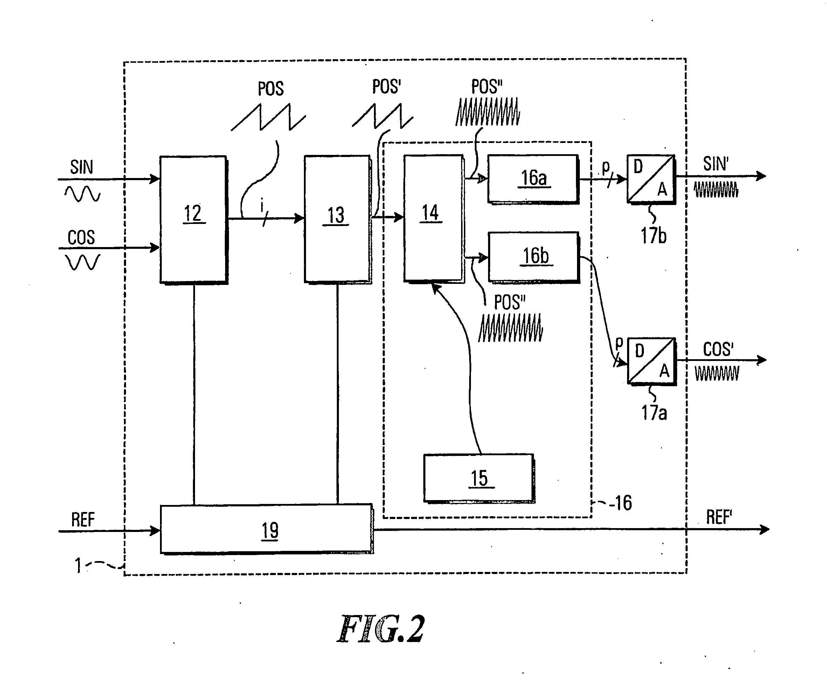

Fig. 2 zeigt schematisch den Aufbau einer Ausführungsform der Vorrichtung 1 der Fig. 1.

Die Eingangs-Signale SIN und COS werden zunächst einer Interpolationseinheit 12 zugeführt, wo sie digitalisiert, fehlerkorrigiert und in ein für die Position des Messmittels repräsentatives Positionssignal, POS mit einer Auflösung von $i$ Bit umgewandelt werden. Das Positionssignal POS kann beispielsweise eine Auflösung von ($i$ = 10) Bit aufweisen. Im Positionssignal POS ist die Lageänderung der Maßstabteilung 4 relativ zur Signalerzeugungseinheit 7 abgebildet. Bei konstanter Bewegung in einer Richtung ergeben sich dabei sägezahnförmige Signalverläufe.

Das Positionssignal POS wird anschließend in ein digitales Filter 13 geleitet, wo verschiedenartige Fehler herausgefiltert und durch die Filterung eventuell entstehende Signalverzögerungen ausgeglichen werden. Im Filter 13 werden insbesondere Stör- und Rauschanteile im Positionssignal POS, hervorgerufen durch entsprechende, dem Positionsmesssystem 2 aufgrund seiner Bauart immanente Stör- und Rauschanteile in den Eingangs-Signalen, ausgeglichen. Außerdem wird die Auflösung des Positionssignals erhöht. Als Ergebnis der Filterung erhält man einen korrigierten, hochaufgelösten Positionswert POS', der in ein Register 14 abgelegt wird.

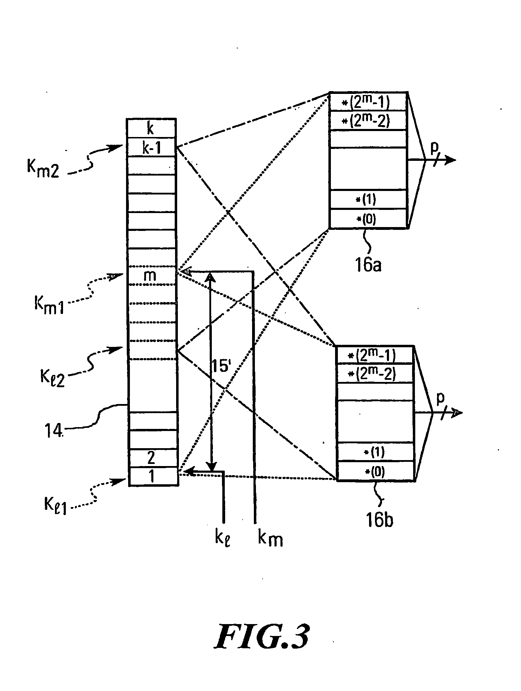

Der korrigierte Positionswert POS' ist, wie in Fig. 3 dargestellt ist, im Register 14 als ein digitaler Wert aus $k$ Bits, im Folgenden als $k$ Wort bezeichnet, abgelegt, vorzugsweise im Integer-Format. Da durch die Korrekturalgorithmen im digitalen Filter 13 die Genauigkeit des korrigierten Positionssignals POS' gegenüber dem Positionssignal POS aus der Interpolationseinheit erhöht ist, gilt die Beziehung ($k > i$).

Im nächsten Schritt findet im Signalgenerator des Systems 1 die Frequenzerhöhung bzw. Perioden-Vervielfachung statt, die im folgenden genauer erläutert wird.

Aus dem $k$-Wort im Register 14 werden von einer Ausleseeinheit 15 $m$ zusammenhängend aufeinanderfolgende Bits, im Folgenden als $m$-Wort bezeichnet, mit vorzugsweise mindestens derselben Taktrate ausgelesen, mit der der hochaufgelöste Positionswert POS' im Register 14 aktualisiert wird.

Der Wert des *m*-Wortes ändert sich periodisch mit einer höheren Frequenz als der Wert des *k*-Wortes, wenn das höchstwertige Bit des *m*-Wortes nicht auf das höchstwertige Bit des *k*-Wortes fällt:

Die Lage des ausgelesenen *m*-Wortes im *k*-Wort wird durch die Lage $k_m$ seines höchstwertigen Bits *m* bestimmt. Das niederwertigste Bit des *m*-Wortes weist dabei die Lage $k_l$ im *k*-Wort auf, wobei die Beziehung $(k_m - k_l = m)$ gilt.

Wird die Lage des *m*-Wortes im *k*-Wort so gewählt, dass die Beziehung $(k_m < k)$ gilt, so erhöht sich die Frequenz, mit der sich das ausgelesene *m*-Wort ändert, um den Faktor $2^{(k-km)}$ gegenüber der Frequenz, mit der das sägezahnähnliche Positionssignal POS' bei konstanter Relativbewegung von Maßstabteilung und Signalerzeugungseinheit variiert. Die erhöhte Signalperiodenanzahl des *m*-Wortes ist in Fig. 2 schematisch durch das Signal POS" dargestellt. Hat mit anderen Worten die Frequenz des Positionssignals POS', die insbesondere der Frequenz der Eingangs-Signale SIN und COS entsprechen kann, einen Wert $f_{P'}$ und die Frequenz des frequenzerhöhten Positionssignals POS" einen Wert $f_{P''}$, so gilt für den Faktor *n* der Frequenzerhöhung:

$$n = (f_{P''} / f_{P'}) = 2^{(k - km)} \hspace{3cm} (1)$$

Anhand der Formel (1) ist zu erkennen, dass sich die Signalfrequenz des Signals POS" durch die Position des *m*-Wortes innerhalb des *k*-Wortes bestimmt. Zur Erläuterung dieses Zusammenhanges sind in Fig. 3 zwei unterschiedlich positionierte *m*-Worte innerhalb des *k*-Wortes dargestellt, die jeweils zu unterschiedlichen Frequenzen führen.

Das erste *m*-Wort beginnt an der Position $(k_{l1} = 1)$ und endet an der Position $(k_{m1} = m)$. Bei dieser Variante werden also die *m* niederwertigsten Bits des *k*-Wortes ausgelesen. Die Signalperiode, mit der sich das Bit $k_{m1}$ im *k*-Wort ändert und damit die Signalperiode des *m*-Wortes bestimmt, beträgt in diesem Fall das $2^{(k-km1)}$-fache, also das $2^{(k-m)}$-fache, der Signalperiode des *k*-Wortes. Da in dieser Position des *m*-Wortes die Differenz $(k - k_{m1})$ für gegebenes *m* und *k* maximal ist, stellt dies die maximal mögliche Periodenvervielfachung dar.

Im zweiten Fall erstreckt sich das *m*-Wort innerhalb des *k*-Wortes von der Anfangsposition beim Bit $k_{l2}$ bis zum Bit $k_{m2} = (k - 1)$. In diesem Fall ist eine Signalperioden-Vervielfachung um den Faktor $2^{(k-km2)} = 2^{[k-(k-1)]} = 2^1 = 2$ möglich. In diesem Fall wird also eine Frequenzverdopplung erreicht.

Fällt das höchstwertige Bit des *m*-Wortes, also $k_m$, mit dem höchstwertigen Bit des *k*-Wortes, also *k*, zusammen, so entspricht die Signalperiode des *m*-Wortes der Signalperiode des *k*-Wortes. In diesem Fall findet durch die Vorrichtung 1 lediglich eine Fehlerkorrektur durch die Interpolationseinheit 12 und den Digitalfilter 13 statt.

Das oben beschriebene Verfahren zur Frequenzerhöhung lässt auf einfach zu implementierende Weise eine einstellbare Frequenzerhöhung zu: Durch eine einfache Bit-Verschiebung, angedeutet durch den Doppelpfeil 15' in Fig. 2, des *m*-Wortes innerhalb des *k*-Wortes lassen sich Frequenzvervielfachungen in Zweierpotenz-Schritten zwischen 2 und $2^{(k-m)}$ erreichen. Die Verschiebung des *m*-Wortes innerhalb des *k*-Wortes kann durch einfache Bit-Maskierung und Bit-Verschiebung durch die Ausleseeinheit 15 erfolgen.

Das Ausgangs-Sinus-Signal SIN' wird in Abhängigkeit vom *m*-Wort durch eine Sinus-Erzeugungseinrichtung 16a, das Ausgangs-Cosinus-Signal COS' durch eine Cosinus-Erzeugungseinrichtung 16b erzeugt. Hierzu wird beispielsweise das *m*-Wort von der Ausleseeinheit zur Adressierung von Ausgangs-Signal-Tabellen 16a, 16b in der Sinus- bzw. Cosinus-Erzeugungseinrichtung verwendet, die in der Vorrichtung 1 in einem flüchtigen oder nicht-flüchtigen Speicher abgelegt sind. Die Tabelle 16b enthält beispielsweise in Form eines eindimensionalen bzw. eindimensional adressierbaren Feldes die aufeinanderfolgenden digitalen Werte eines Cosinus-Signals COS' in einer Auflösung von *p* Bits. Die Bit-Auflösung *p* des Ausgangs-Signals COS' ist unabhängig von der Bit-Auflösung *i* des Eingangs-Signals COS oder der Bit-Auflösung *k* des Positionssignals POS". Die Ausgangs-Signal-Tabelle 16b enthält entsprechend ein Ausgangs-Sinus-Signal SIN'.

Aufgrund der Phasenverschiebung zwischen der Sinus- und Cosinus-Funktion kann natürlich auch lediglich eine einzige Tabelle 16 (nicht gezeigt) verwendet werden kann. Bei dieser Variante wird die Tabelle zur Erzeugung des SIN'- und des COS'-Signals an zwei im konstanten Abstand voneinander liegenden Positionen ausgelesen. Dieser Abstand entspricht unter Berücksichtigung der Auslesefrequenz der gerade dem Phasenversatz von 90° zwischen Sinus und Cosinus. Ebenso ist es denkbar, anstelle der Erzeugung des SIN'- und des COS'-Signals durch die Tabelle 16 bzw. die Tabellen 16a und 16b einen Berechnungsalgorithmus zu verwenden. Dazu kann vorzugsweise der Cordic-Algorithmus herangezogen werden.

Das Register 14, die Sinus-Erzeugungseinrichtung 16a und die Cosinus-Erzeugungseinrichtung 16b sowie, bei entsprechender Ausführung, die Auslese- bzw. Adressiereinheit 15 können funktionell zu einer Signalerzeugungseinheit 16 zusammengefasst werden, die in Abhängigkeit vom Positionssignal die Ausgangssignale erzeugt.

Jede der beiden Ausgangs-Tabellen 16a, 16b weist entsprechend dem Wertebereich des *m*-Wortes eine Anzahl von $2^m$ tabellierten Sinus- bzw. Cosinus-Werten auf und gibt vorzugsweise den vollständigen Verlauf einer Periode des jeweiligen Sinus- bzw. Cosinus-Signals wieder. Folglich ist die Periode des jeweiligen Sinus- und Cosinus-Signals SIN' und COS' in den Tabellen 16a, 16b mit $2^m$ aufeinanderfolgenden Stützstellen aus jeweils p Bits aufgelöst.

Der Wert des $m$-Wortes dient der Adressierung der Ausgangs-Tabellen 16a, 16b. Dies ist in der Fig. 3 durch die Darstellung des Wertes des ausgelesenen $m$-Wortes in der Form *("Wert des $m$-Wortes") wiedergegeben. Hat das ausgelesene $m$-Wort beispielsweise den Zahlenwert 0, so wird der an der Position 0 gelegene Wert der beiden Ausgangs-Tabellen 16a, 16b ausgelesen. Dieser Wert ist in Fig. 3 symbolisch mit *(0) dargestellt. Maximal kann das $m$-Wort den Wert $(2^m- 1)$ annehmen, wenn nämlich sämtliche Bits des $m$-Wortes auf 1 gesetzt sind. In diesem Fall wird der letzte Wert der jeweiligen Tabelle 16a, 16b an der Position $(2^m - 1)$ ausgelesen. Dieser Wert ist in Fig. 3 symbolisch durch *$(2^m-1)$ wiedergegeben.

Die jeweils von der Ausgangs-Tabelle 16a, 16b ausgelesenen Werte werden schließlich jeweils einem Digital-Analog-Wandler 17a, 17b zugeführt, der diese in Analog-Signale umwandelt. Die analogen Signale werden dann aus der Vorrichtung 1 geleitet. Zuvor können sie durch in der Fig. 2 nicht gezeigte Verstärker Schaltungen auf standardisierte Signalpegel gesetzt und durch ebenfalls nicht dargestellte Filter geglättet werden. Gleichfalls kann anstelle der Digital-Analog-Wandler jeweils ein der Werte der Ausgangstabelle 16a und 16b entsprechendes Pulsmuster (PWM) ausgegeben werden, das mit hoher Frequenz erzeugt wird und durch einen Tiefpass gefiltert die Signale SIN' und COS' erzeugt.

Die Vorrichtung 1 enthält schließlich eine Einheit 19, mit der das Referenzsignal REF an die veränderten Signale SIN' und COS' angepasst wird. Das Referenzsignal REF' wird durch die Einheit 19 neu synthetisiert, so dass es nur in den Quadranten der Signale SIN' und COS' auftritt, die der Lage der ursprünglichen Quadranten des Signals REF in den Eingangs-Signalen SIN und COS entsprechen. Hierzu wird durch die Einheit 19 der durch die Interpolationseinheit 12 interpolierte und das digitale Filter 13 gefilterte Positionswert POS' verwendet.

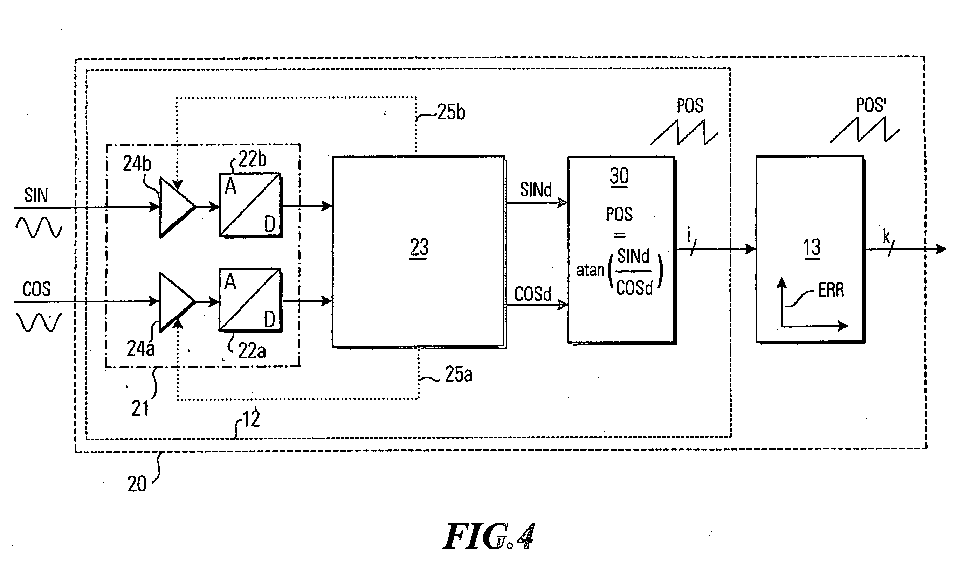

Mit Bezug auf die Fig. 4 werden nun Aufbau und Funktion einer Ausführungsform der Interpolationseinheit 12 und des digitalen Filters 13 erläutert. Die Interpolationseinheit 12 und das digitale Filter 13 sind funktionell Teil einer Positionsbestimmungseinheit 20, durch die das korrigierte und hochaufgelöste Positionssignal POS' erzeugt wird, dessen Signalperiode noch der Signalperiode der Eingangs-Signale SIN und COS entspricht, dessen Auflösung mit $k$ Bit jedoch erhöht ist.

Die analogen Eingangs-Signale SIN und COS aus dem Positionsmesssystem 2 werden der Interpolationseinheit 12 zugeführt, wo sie in einer Eingangsschnittstelle 21 durch jeweils einen Analog-Digital-Wandler 22a, 22b getrennt digitalisiert und in digitaler Form einer Signalkonditionierungseinheit 23 zugeführt werden.

Anstelle der beiden separaten Leitungen für das Sinus-Eingangs-Signal SIN und das Cosinus-Eingangs-Signal COS kann auch eine einzige Datenleitung vorgesehen sein, wobei die Eingangs-Signale SIN und COS dann im Multiplex-Verfahren verarbeitet werden können. Ebenso können die Signale SIN und COS bereits in digitaler Form vorliegen, so dass auf die Analog-Digital-Wandler 22a, 22b verzichtet werden kann.

Die Signalkonditionierungseinheit 23 dient dazu, die Signalqualität der Eingangs-Signale SIN und COS vor der weiteren Verarbeitung zu verbessern. Die Signalkonditionierungseinheit 23 berechnet Abweichungen von Soll-Zuständen der Eingangs-Signale SIN und COS und korrigiert die Eingangs-Signale SIN und COS.

Die Interpolationseinheit 12 kann insbesondere die Funktionen aufweisen, die in Kirchberger, R., und Hiller, B., "Oversamplingverfahren zur Verbesserung der Erfassung von Lage und Drehzahl an elektrischen Antrieben mit inkrementellem Gebersystem", in: SPS/IPC/Drives, Nürnberg 1999, Conf.-rec. pp. 598-606, beschrieben sind.

Beispielsweise werden durch die Signalkonditionierungseinheit 23 jeweils die Signal-Offsets, d.h. z.B. die Mittelwerte der Eingangs-Signale SIN und COS über einen vorbestimmten Zeitraum, berechnet und bei Abweichung von ihren Soll-Wert über die Kompensationseinheiten 24a, 24b korrigiert. Für jedes Eingangs-Signal SIN bzw. COS findet der Abgleich getrennt statt. Der Abgleich ist in Fig. 3 schematisch durch die punktierten Pfeile 25a, 25b dargestellt.

Bei der Ausführungsform der Fig. 4 sind die Kompensationseinheiten 24a, 24b im analogen Signalweg von jeweils SIN und COS dargestellt. Natürlich kann eine Off-set-Korrektur auch an den bereits digitalisierten Signalen SIN und COS vorgenommen werden.

Durch die Signalkonditionierungseinheit 23 werden auch die relativen Signal-Amplituden des Eingangs-Sinus-Signals SIN und des Eingangs-Cosinus-Signals COS bestimmt. Im Idealzustand weisen beide Eingangs-Signale SIN und COS die gleiche Amplitude auf. Abweichungen der Amplitude der tatsächlich vorliegenden Signale SIN und COS werden ebenfalls durch Rückkopplung von den Kompensationseinheiten 24a, 24b ausgeregelt.

Außerdem können von der Signalkonditionierungseinheit 23 Phasenfehler in den Eingangs-Signalen SIN und COS erfasst und über die Kompensationseinheiten 24a, 24b korrigiert werden. Nicht exakt sinusförmige Verläufe der Eingangs-Signale SIN und COS können durch eine in der Signalkonditionierungseinheit 23 abgespeicherte Korrekturtabelle (nicht gezeigt) korrigiert werden. Natürlich kann eine Amplituden- und Phasenkorrektur ebenso an den bereits digitalisierten Signalen SIN und COS vorgenommen werden.

Zusätzlich kann die Auflösung der digitalisierten Eingangs-Signale SIN und COS durch ein in der Signalkonditionierungseinheit 23 implementiertes schnelles, digitales Filter gegenüber der Auflösung der AD-Wandler erhöht und das Quantisierungsrauschen bzw. andere Störungen reduziert werden.

Aus der Signalkonditionierungseinheit 23 werden die fehlerkorrigierten und ausgeregelten digitalen Zwischensignale SINd und COSd zu einer Berechnungseinheit 30 geleitet.

In der Berechnungseinheit 30 wird aus den beiden Signalen SINd und COSd ein Positionssignal POS erzeugt, welches die Position der Maßstabteilung 4 über die Zeit wiedergibt. Bei einer Bewegung der Maßstabteilung 4 relativ zur Signalerzeugungseinheit 7 mit konstanter Geschwindigkeit, also einer linearen Lageveränderung, ist das Positionssignal idealerweise eine Gerade, deren Steigung der Bewegungsgeschwindigkeit entspricht.

Anstelle einer durchgängigen Positionskurve wird aus den Eingangs-Signalen SIN und COS vorzugsweise ein periodisches Positionssignal POS gebildet, um die Berechnung der Position einfach zu gestalten und den begrenzten Wertevorrat der digitalen Zahlenwerte besser auszuschöpfen. Für eine Bewegung mit konstanter Geschwindigkeit weist ein solches periodisches Positionssignal POS im Wesentlichen die Form eines Sägezahns mit einer schrägen und einer senkrechten Flanke auf.

Die Periodendauer des Positionssignals entspricht der Periode des SIN- und COS-Signals und der Anstieg des schrägen Astes des Positionssignals POS entspricht der Geschwindigkeit der Bewegung der Maßstabteilung 4 relativ zur Signalerzeugungseinheit 7.

Das Positionssignal POS kann auf einfache Weise durch Bildung des Arkustangens (*atan*) aus dem Quotienten des SINd- und dem COSd-Signals gebildet wird. Es gilt also

$$POS = atan\ (SINd\ /\ COSd) \qquad\qquad (2).$$

Die Berechnung des Arkustangens des Quotienten SINd / COSd kann beispielsweise über eine Look up-Tabelle erfolgen oder über den CORDIC-Algorithmus.

Das Positionssignal POS wird mit einer Genauigkeit von $i$ Bit berechnet und in sehr kurzer zeitlicher Folge, beispielsweise jede Mikrosekunde, aktualisiert. Nach seiner Berechnung wird das digitale Positionssignal POS an das digitale Filter 13 geleitet.

Das digitale Filter 13 arbeitet mit hoher Taktfrequenz, beispielsweise 1 MHz. Durch das Digitalfilter 13 werden Rauschanteile und höherfrequente Fehleranteile im Positionswort POS reduziert und gleichzeitig die Auflösung des Positionswortes POS von $i$ auf $k$ Bit des korrigierten, hochaufgelösten Positionswortes POS' erhöht. Die durch den Filtervorgang entstehende Verzögerung wird durch einen von der bisherigen Signalgeschichte des Positionssignal POS abhängigen Korrekturwert, der dem gefilterten Positionswert aufaddiert wird, kompensiert. Insbesondere kann der Korrekturwert von der bisher gemessenen Bewegungsgeschwindigkeit, die leicht aus ein oder mehreren in einem zeitlichen Abstand bestimmten Positionswerten POS' berechnet werden kann, ermittelt werden.

Das digitale Filter 13 kann verschiedene Filteralgorithmen einzeln oder in Kombination anwenden.

So können hochfrequente Rauschanteile durch Bildung eines gleitenden Mittelwertes von q aufeinanderfolgenden Werten des Positionssignals POS gebildet werden. In dieser Ausgestaltung wirkt das Digitalfilter 13 als ein Tiefpass-Filter. Dabei ist darauf zu achten, dass das Digitalfilter 13 keine informationstragenden, d.h. für die nachfolgende Regelung bzw. Steuerung relevanten Frequenzen im Positionssignal POS herausfiltert.

Außerdem kann das Digitalfilter 13 signalgeberabhängige Fehler herausfiltern. Hierzu können typische Fehlerkurven von bekannten Positionsmesssystemen experimentell vorab bestimmt und im Digitalfilter 13 abgespeichert werden. Eine solche Fehlerkurve in Form einer Fehlercharakteristik ist in Fig. 3 schematisch als ERR angegeben. Die signalgeberabhängigen Fehler im Positionssignal POS können dann durch Multiplikation im Frequenzbereich mit einer vorab im Digitalfilter 13 gespeicherten Übertragungsfunktion kompensiert werden. Alternativ oder zusätzlich können die Fehlerkurven auch als Zeitreihen oder Frequenzkurven abgespeichert werden, die im Digitalfilter laufend mit dem Verlauf oder dem Frequenzgehalt des Positionssignals POS verglichen werden. Bei einem vorbestimmten Maß an Übereinstimmung zwischen dem Positionssignal POS und der gespeicherten Fehlerkurve kann dann eine vorbestimmte Fehlerkompensation durchgeführt werden.

Durch die Positionsbestimmungseinheit 20 lässt sich die Qualität der Eingangs-Signale soweit verbessern, dass die erhöhte Auflösung des Positionswortes mit k Bit voll ausgenutzt werden kann.

**Patentansprüche**

1. Positionsmessverfahren, bei dem aus einem von einem Positionssensor erzeugten Eingangs-Sinus-Signal (SIN) und Eingangs-Cosinus-Signal (COS), ein digitales Positionssignal (POS), das eine vom Positionssensor gemessene Position repräsentiert, berechnet und digital gefiltert wird, und wobei in Abhängigkeit vom gefilterten Positionssignal (POS', POS") ein Ausgangs-Sinus-Signal (SIN') und ein Ausgangs-Cosinus-Signal (COS') mit jeweils einer gegenüber der Frequenz ($f_p$) der Eingangs-Signale (SIN, COS) vervielfachten Signalperiode ($f_{p"}$) erzeugt werden, **dadurch gekennzeichnet, dass** im Zuge der Filterung aus dem Positionssignal ein digitales Positionssignal (POS') mit einer gegenüber dem berechneten Positionssignal (POS) erhöhten Auflösung ($k$) gebildet wird.

**2.** Verfahren nach Anspruch 1, **dadurch gekennzeichnet, dass** das Positionssignal Tiefpass-gefiltert wird.

**3.** Verfahren nach Anspruch 1 oder 2, **dadurch gekennzeichnet, dass** das Positionssignal durch Bildung eines gleitenden Mittelwertes gefiltert wird.

**4.** Verfahren nach einem der oben genannten Ansprüche, **dadurch gekennzeichnet, dass** aus dem Positionssignal signalgebertypische Fehler herausgefiltert werden.

**5.** Verfahren nach Anspruch 4, **dadurch gekennzeichnet, dass** das Positionssignal (POS) durch Verwendung von gespeicherten, signalgeberabhängigen Fehlerkurven (ERR) gefiltert wird.

**6.** Verfahren nach einem der oben genannten Ansprüche, **dadurch gekennzeichnet, dass** das Positionssignal (POS) aus dem Arkustangens *(atan)* im Wesentlichen des Quotienten aus dem Eingangs-Sinus-Signal (SIN) und dem Eingangs-Cosinus-Signal (COS) berechnet wird.

**7.** Verfahren nach einem der oben genannten Ansprüche, **dadurch gekennzeichnet, dass** das Eingangs-Sinus-Signal (SIN) und das Eingangs-Cosinus-Signal (COS) vor der Berechnung des Positionssignals (POS) fehlerkorrigiert werden.

**8.** Verfahren nach Anspruch 7, **dadurch gekennzeichnet, dass** bei der Fehlerkorrektur unterschiedliche Amplituden des Eingangs-Sinus-Signals (SIN) und des Eingangs-Cosinus-Signals (COS) ausgeglichen werden.

**9.** Verfahren nach Anspruch 7 oder 8, **dadurch gekennzeichnet, dass** bei der Fehler korrektur Abweichungen des Offsets im Eingangs-Sinus-Signal (SIN) und/oder Eingangs-Cosinus-Signal (COS) von einem Soll-Offset ausgeregelt werden.

**10.** Verfahren nach einem der Ansprüche 7 bis 10, **dadurch gekennzeichnet, dass** bei der Fehlerkorrektur Phasenfehler im Eingangs-Sinus-Signal (SIN) und/oder im Eingangs-Cosinus-Signal (COS) korrigiert werden.

**11.** Verfahren nach einem der Ansprüche 7 bis 10, **dadurch gekennzeichnet, dass** die Korrekturwerte, mit denen die Fehler im Eingangs-Sinus-Signal (SIN) und/oder im Eingangs-Cosinus-Signal (COS) korrigiert werden, aus dem Eingangs-Sinus-Signal (SIN) und/oder dem Eingangs-Cosinus-Signal (COS) selbst berechnet werden.

**12.** Verfahren nach einem der oben genannten Ansprüche, **dadurch gekennzeichnet, dass** das Positions signal (POS, POS', POS") in Form eines sich im Wesentlichen periodisch ändernden, digitalen Zahlenwertes aus $k$ Bit erzeugt wird, aus dem ein Teilwort ($m$-Wort) aus $m$ aufeinanderfolgenden Bit ausgelesen wird,

**13.** Verfahren nach Anspruch 12, **dadurch gekennzeichnet, dass** das $m$-Wort zur Adressierung wenigstens einer Ausgangs-Tabelle (16a, 16b) zur Erzeugung der Ausgangs-Signale (SIN', COS') verwendet wird.

**14.** Verfahren nach Anspruch 12 oder 13, **dadurch gekennzeichnet, dass** die Position ($k_m$) des $m$-Wortes innerhalb des k-Wortes durch eine Ausleseeinheit (15) verschoben wird, um die Frequenz der Ausgangs-Signale (SIN', COS') zu ändern.

**15.** Verfahren nach einem der oben genannten Ansprüche, **dadurch gekennzeichnet, dass** die Frequenz der Eingangssignale (SIN, COS) um einen ganzzahligen Faktor erhöht wird.

**16.** Verfahren nach einem der oben genannten Ansprüche, **dadurch gekennzeichnet, dass** die Frequenz der Eingangssignale (SIN, COS) in den Ausgangs-Signale (SIN', COS') um den Faktor $2^{k-km}$ erhöht wird.

**17.** Verfahren nach einem der oben genannten Ansprüche, **dadurch gekennzeichnet, dass** die Ausgangs-Signale (SIN', COS') in Abhängigkeit vom Positionssignal (POS, POS', POS") aus wenigstens einer Ausgangs-Tabelle (16a, 16b) enthaltend digitalisierte Werte ($*(0),...,*(2^m-1)$) einer Sinusfunktion ausgelesen werden.

**18.** Verfahren nach einem der Ansprüche 13 bis 17, **dadurch gekennzeichnet, dass** zwei, jeweils dem Ausgangs-Sinus-Signal (SIN') und dem Ausgangs-Cosinus-Signal (COS') zugeordnete Ausgangs-Tabellen (16a, 16b) verwendet werden.

**19.** Verfahren nach einem der oben genannten Ansprüche, **dadurch gekennzeichnet, dass** die Eingangssignale (SIN, COS) von einem Weg- oder Winkelmesssystem (2) erzeugt werden.

**20.** Verfahren nach einem der oben genannten Ansprüche, **dadurch gekennzeichnet, dass** die Quadrantenlage eines Referenzsignals (REF) relativ zu den Eingangs-Signalen (SIN, COS) an die Ausgangs-Signale (SIN', COS') angepasst wird.

**21.** Positionsmesssystem (1) zur Verarbeitung von Signalen (SIN, COS, REF) eines Positionssensors (1) mit einer Eingangsschnittstelle (21), der im Betrieb ein Eingangs-Sinus-Signal (SIN) und Eingangs-Cosinus-Signal (COS) eines Positionssensors (7) zuführbar ist, mit einer Berechnungseinheit (30), durch die aus dem Eingangs-Sinus-Signal (SIN) und dem Ausgangs-Cosinus-Signal (COS) ein digitales, eine vom Positionssensor gemessene Position repräsentierendes Positionssignal (POS) erzeugbar ist, und mit einer Signalerzeugungseinheit (16), durch die in Abhängigkeit vom Positionssignal (POS) ein Ausgangs-Sinus-Signal (SIN') und ein Ausgangs-Cosinus-Signal (COS') mit jeweils einer gegenüber dem Eingangs-Sinus-Signal (SIN) und Eingangs-Cosinus-Signal (COS) vervielfachten Signalperiode erzeugbar ist, und mit einem zwischen der Berechnungseinheit (30) und der Eingangsschnittstelle (21) angeordneten Digitalfilter (13), **dadurch gekennzeichnet, dass** das Positionssignal (POS) vor dem Digitalfilter eine Auflösung von $i$ Bit und nach dem Digitalfilter eine Auflösung von $k$ Bit aufweist, wobei $k > i$ gilt.

**22.** Vorrichtung nach Anspruch 21, **dadurch gekennzeichnet, dass** ein Register (14), in dem das Positionssignal als $k$-Wort in einer Auflösung von $k$ Bits ablegbar ist, und eine Adressiereinheit, durch die aus dem $k$-Wort ein $m$-Wort aus $m$ aufeinanderfolgenden Bits, $m < k$, auslesbar ist, vorgesehen sind.

**23.** Vorrichtung nach Anspruch 21 oder 22, **dadurch gekennzeichnet, dass** zwischen der Berechnungseinheit (30) und der Eingangsschnittstelle (21) eine Signalkonditionierungseinrichtung (23) angeordnet ist, durch die Signalfehler im Eingangs-Sinus-Signal (SIN) und Eingangs-Cosinus-Signal (COS) korrigierbar sind.

**24.** Vorrichtung nach einem der Ansprüche 21 bis 23, **dadurch gekennzeichnet, dass** durch den Digitalfilter (13) signalgeberabhängige Fehler aus dem Positionssignal (POS) herausfilterbar sind.

**25.** Vorrichtung nach Anspruch 24, **dadurch gekennzeichnet, dass** das Digitalfilter (13) im Wesentlichen als ein Tiefpass-Filter ausgestaltet ist.

**26.** Vorrichtung nach einem der Ansprüche 21 bis 25, **dadurch gekennzeichnet, dass** die Vorrichtung ein Wegmessmittel (2) umfasst, durch das die Eingangs-Signale (SIN, COS) als die Bewegung eines Messmittels (4) repräsentierende Signale erzeugbar sind.

**Claims**

**1.** A position measurement method, in which a digital position signal (POS) which represents a position measured by a position sensor is calculated from an input sine signal (SIN) and an input cosine signal (COS) produced by the position sensor and is digitally filtered, and with an output sine signal (SIN') and an output cosine signal (COS') each having a signal period ($f_{P''}$) which is multiplied relative to the frequency ($f_P$) of the input signals (SIN, COS) being produced as a function of the filtered position signal (POS', POS"), __characterized in that__ a digital position signal (POS') is formed in the course of the filtering from the position signal, with a resolution ($k$) which is higher than that of the calculated position signal (POS).

**2.** The method as claimed in claim 1, **characterized in that** the position signal is low-pass-filtered.

**3.** The method as claimed in claim 1 or 2, **characterized in that** the position signal is filtered by forming a sliding mean value.

**4.** The method as claimed in one of the abovementioned claims, **characterized in that** errors which are typical of the signal transmitter are filtered out of the position signal.

**5.** The method as claimed in claim 4, **characterized in that** the position signal (POS) is filtered by using stored error curves (ERR) which are dependent on the signal transmitter.

6. The method as claimed in one of the abovementioned claims, **characterized in that** the position signal (POS) is calculated from the arctan (*atan*) essentially of the quotient from the input sine signal (SIN) and the input cosine signal (COS).

7. The method as claimed in one of the abovementioned claims, **characterized in that** the input sine signal (SIN) and the input cosine signal (COS) are error-corrected before the calculation of the position signal (POS).

8. The method as claimed in claim 7, **characterized in that** different amplitudes of the input sine signal (SIN) and of the input cosine signal (COS) are compensated for in the error correction process.

9. The method as claimed in claim 7 or 8, **characterized in that** discrepancies between the offset in the input sine signal (SIN) and/or the input cosine signal (COS) and a nominal offset are regulated out during the error correction process.

10. The method as claimed in one of claims 7 to 10, **characterized in that** phase errors in the input sine signal (SIN) and/or in the input cosine signal (COS) are corrected during the error correction process.

11. The method as claimed in one of claims 7 to 10, **characterized in that** the correction values which are used to correct the errors in the input sine signal (SIN) and/or in the input cosine signal (COS) are calculated from the input sine signal (SIN) and/or from the input cosine signal (COS) themselves or itself.

12. The method as claimed in one of the abovementioned claims, **characterized in that** the position signal (POS, POS', POS") is produced in the form of an essentially periodically varying, digital numerical value from *k* bits, from which a word element (*m* word) is read from *m* successive bits.

13. The method as claimed in claim 12, **characterized in that** the *m* word is used for addressing at least one output table (16a, 16b) in order to produce the output signals (SIN', COS').

14. The method as claimed in claim 12 or 13, **characterized in that** the position ($k_m$) of the *m* word within the *k* word is shifted by means of a read unit (15), in order to change the frequency of the output signals (SIN', COS').

15. The method as claimed in one of the abovementioned claims, **characterized in that** the frequency of the input signals (SIN, COS) is increased by an integer factor.

16. The method as claimed in one of the abovementioned claims, **characterized in that** the frequency of the input signals (SIN, COS) is increased by the factor $2^{k-km}$ in the output signals (SIN', COS').

17. The method as claimed in one of the abovementioned claims, **characterized in that** the output signals (SIN', COS') are read as a function of the position signal (POS, POS', POS") from at least one output table (16a, 16b) containing digitized values ($*(0)$, ..., $*(2^m-1)$) of a sine function.

18. The method as claimed in one of claims 13 to 17, **characterized in that** two output tables (16a, 16b) are used, and are respectively associated with the output sine signal (SIN') and the output cosine signal (COS').

19. The method as claimed in one of the abovementioned claims, **characterized in that** the input signals (SIN, COS) are produced from a position or angle measurement system (2).

20. The method as claimed in one of the abovementioned claims, **characterized in that** the quadrant position of a reference signal (REF) relative to the input signals (SIN, COS) is matched to the output signals (SIN', COS').

21. A position measurement system (1) for processing of signals (SIN, COS, REF) from a position sensor (1) with an input interface (21) to which an input sine signal (SIN) and an input cosine signal (COS) from a position sensor (7) can be supplied during operation, having a calculation unit (30) by means of which a digital position signal (POS) which represents a position measured by the position sensor, can be produced from the input sine signal (SIN) and the output cosine signal (COS), and having a signal generation unit (16), by means of which an output sine signal (SIN') and an output cosine signal (COS') can be produced as a function of the position signal (POS), respectively with a signal period is multiplied with respect to of the input sine signal (SIN) and the input cosine signal (COS), and with a digital filter (13) arranged between the calculation unit (30) and the input interface (21), **characterized in**

**that** the position signal (POS) has a resolution of *i* bits upstream of the digital filter, and has a resolution of *k* bits downstream from the digital filter, where *k > i*.

22. The apparatus as claimed in claim 21, **characterized in that** a register (14) is provided in which the position signal can be stored as a *k* word with a resolution of *k bits,* and an addressing unit is provided, by means of which an *m* word comprising *m* successive bits where *m < k* can be read from the *k* word.

23. The apparatus as claimed in claim 21 or 22, **characterized in that** a signal conditioning device (23) is arranged between the calculation unit (30) and the input interface (21), by means of which the signal errors in the input sine signal (SIN) and input cosine signal (COS) can be corrected.

24. The apparatus as claimed in one of claims 21 to 23, **characterized in that** errors which are dependent on the signal transmitter can be filtered out of the position signal (POS) by means of the digital filter (13).

25. The apparatus as claimed in claim 24, **characterized in that** the digital filter (13) is essentially in the form of a low-pass filter.

26. The apparatus as claimed in one of claims 21 to 25, **characterized in that** the apparatus has a displacement measurement means (2), by means of which the input signals (SIN, COS) can be produced as signals which represent the movement of a measurement means (4).

**Revendications**

1. Procédé de mesure de position selon lequel à partir d'un signal sinusoïdal d'entrée (SIN) et d'un signal cosinusoïdal d'entrée (COS) générés par un capteur de position, un signal de position numérique (POS) représentant une position mesurée par le capteur de position est calculé et soumis à un filtrage numérique, et selon lequel en fonction du signal de position filtré (POS', POS"), un signal sinusoïdal de sortie (SIN') et un signal cosinusoïdal de sortie (COS') sont générés avec une période de signal ($f_{p"}$) multipliée par rapport à la fréquence ($f_{p'}$) des signaux d'entrée (SIN, COS), **caractérisé en ce qu'**au cours du filtrage à partir du signal de position est formé un signal de position numérique (POS') avec une résolution (k) plus élevée par rapport au signal de position calculé (POS).

2. Procédé selon la revendication 1, **caractérisé en ce que** le signal de position est soumis à un filtrage passe-bas.

3. Procédé selon la revendication 1 ou 2, **caractérisé en ce que** le signal de position est filtré par formation d'une valeur moyenne mobile.

4. Procédé selon l'une des revendications précédentes, **caractérisé en ce que** des erreurs typiques des générateurs de signaux sont filtrées à partir du signal de position.

5. Procédé selon la revendication 4, **caractérisé en ce que** le signal de position (POS) est filtré à l'aide de courbes d'erreur (ERR) mises en mémoire qui sont fonction du générateur de signaux.

6. Procédé selon l'une des revendications précédentes, **caractérisé en ce que** le signal de position (POS) est calculé à partir de l'arc tangente (atan) globalement du quotient du signal sinusoïdal d'entrée (SIN) et du signal cosinusoïdal d'entrée (COS).

7. Procédé selon l'une des revendications précédentes, selon lequel les erreurs du signal sinusoïdal d'entrée (SIN) et du signal cosinusoïdal d'entrée (COS) sont corrigées avant le calcul du signal de position (POS).

8. Procédé selon la revendication 7, **caractérisé en ce que** lors de la correction d'erreurs, des amplitudes différentes du signal sinusoïdal d'entrée (SIN) et du signal cosinusoïdal d'entrée (COS) sont équilibrées.

9. Procédé selon la revendication 7 ou 8, **caractérisé en ce que** lors de la correction d'erreurs, des écarts du décalage dans le signal sinusoïdal d'entrée (SIN) et/ou dans le signal cosinusoïdal d'entrée (COS) par rapport à un décalage théorique sont compensés.

10. Procédé selon l'une des revendications 7 à 10, **caractérisé en ce que** lors de la correction d'erreurs, des erreurs de phase dans le signal sinusoïdal d'entrée (SIN) et/ou dans le signal cosinusoïdal d'entrée (COS) sont corrigées.

11. Procédé selon l'une des revendications 7 à 10, **caractérisé en ce que** les valeurs de correction avec lesquelles les erreurs dans le signal sinusoïdal d'entrée (SIN) et/ou dans le signal cosinusoïdal d'entrée (COS) sont corrigées sont calculées à partir du signal sinusoïdal d'entrée (SIN) et/ou du signal cosinusoïdal d'entrée (COS) eux-mêmes.

12. Procédé selon l'une des revendications précédentes, **caractérisé en ce que** le signal de position (POS, POS', POS") est généré sous la forme d'une valeur numérique de k bits variable globalement périodiquement, à partir de laquelle un mot partiel (mot m) de m bits successifs est lu.

13. Procédé selon la revendication 12, **caractérisé en ce que** le mot m est utilisé pour adresser au moins un tableau de sortie (16a, 16b) pour générer les signaux de sortie (SIN', COS').

14. Procédé selon la revendication 12 ou 13, **caractérisé en ce que** la position (km) du mot m à l'intérieur du mot k est decalée par l'unité de lecture (15) afin de modifier la fréquence des signaux de sortie (SIN', COS').

15. Procédé selon l'une des revendications précédentes, **caractérisé en ce que** la fréquence des signaux d'entrée (SIN, COS) est augmentée d'un facteur entier.

16. Procédé selon l'une des revendications précédentes, **caractérisé en ce que** la fréquence des signaux d'entrée (SIN, COS) dans les signaux de sortie (SIN', COS') est augmentée du facteur $2^{k-km}$.

17. Procédé selon l'une des revendications précédentes, **caractérisé en ce que** les signaux de sortie (SIN', COS') sont lus en fonction du signal de position (POS, POS', POS") dans au moins un tableau de sortie (16a, 16b) contenant des valeurs numérisées ($*(0)$, ..., $*(2^m-1)$) d'une fonction sinusoïdale.

18. Procédé selon l'une des revendications 13 à 17, **caractérisé en ce que** deux tableaux de sortie (16a, 16b) affectés respectivement au signal sinusoïdal de sortie (SIN') et au signal cosinusoïdal de sortie (COS') sont utilisés.

19. Procédé selon l'une des revendications précédentes, **caractérisé en ce que** les signaux d'entrée (SIN, COS) sont générés par un système de mesure de déplacement ou d'angle (2).

20. Procédé selon l'une des revendications précédentes, **caractérisé en ce que** la position de quadrant d'un signal de référence (REF) par rapport aux signaux d'entrée (SIN, COS) est adaptée aux signaux de sortie (SIN', COS').

21. Système de mesure de position (1) pour le traitement de signaux (SIN, COS, REF) d'un capteur de position (1), avec une interface d'entrée (21) dans laquelle peuvent être amenés, en fonctionnement, un signal sinusoïdal d'entrée (SIN) et un signal cosinusoïdal d'entrée (COS) d'un capteur de position (7), une unité de calcul (30) à l'aide de laquelle un signal de position numérique (POS) représentant une position mesurée par le capteur de position peut être généré à partir du signal sinusoïdal d'entrée (SIN) et du signal cosinusoïdal de sortie (COS), une unité génératrice de signaux (16) à l'aide de laquelle peuvent être générés, en fonction du signal de position (POS), un signal sinusoïdal de sortie (SIN') et un signal cosinusoïdal de sortie (COS') avec une période de signal multipliée par rapport au signal sinusoïdal d'entrée (SIN) et au signal cosinusoïdal d'entrée (COS), et un filtre numérique (13) disposé entre l'unité de calcul (30) et l'interface d'entrée (21), **caractérisé en ce que** le signal de position (POS) présente avant le filtre numérique une résolution de i bits et après le filtre numérique une résolution de k bits, étant précisé que k>i.

22. Dispositif selon la revendication 21, **caractérisé en ce qu'**il est prévu un registre (14) dans lequel le signal de position peut être stocké sous la forme d'un mot k avec une résolution de k bits, et une unité d'adressage à l'aide de laquelle un mot m de m bits successifs peut être lu à partir du mot k, étant précisé que m<k.

23. Dispositif selon la revendication 21 ou 22, **caractérisé en ce qu'**il est prévu entre l'unité de calcul (30) et l'interface d'entrée (21) un dispositif de conditionnement de signaux (23) à l'aide duquel les erreurs de signaux peuvent être corrigées dans le signal sinusoïdal d'entrée (SIN) et le signal cosinusoïdal d'entrée (COS).

24. Dispositif selon l'une des revendications 21 à 23, **caractérisé en ce que** grâce au filtre numérique (13), des erreurs qui dépendent du générateur de signaux peuvent être filtrées à partir du signal de position (POS).

**25.** Dispositif selon la revendication 24, **caractérisé en ce que** le filtre numérique (13) est conçu globalement comme un filtre passe-bas.

**26.** Dispositif selon l'une des revendications 21 à 25, **caractérisé en ce qu'**il comprend un moyen de mesure de déplacement (2) à l'aide duquel les signaux d'entrée (SIN, COS) peuvent être générés comme signaux représentant le déplacement d'un moyen de mesure (4).

EP 1 606 590 B1

*FIG.1*

*FIG.2*

## FIG.3

$$POS = atan\left(\frac{SINd}{COSd}\right)$$

**FIG. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0872714 A1
- DE 19815438 A1
- US 6097318 A
- US 6265992 B1
- DE 10138640 C1
- EP 0552726 B1
- EP 1236973 A2

**In der Beschreibung aufgeführte Nicht-Patentliteratur**

- **KIRCHBERGER, R. ; HILLER, B.** Oversamplingverfahren zur Verbesserung der Erfassung von Lage und Drehzahl an elektrischen Antrieben mit inkrementellem Gebersystem. *SPS/IPC/Drives,* November 1999, 598-606